# EUROPEAN PATENT APPLICATION

(11) **EP 1 189 155 A2**
(43) Date of publication of application: **20.03.2002**
(21) Application number: 01307703.7
(22) Date of filing: 11.09.2001
(51) Int. Cl.: G06F 17/30

(54) **Information communication terminal and method of sorting registered information in the terminal**

(30) Priority: 13.09.2000 JP 2000278111
(71) Applicant: Pioneer Corporation, Meguro-ku, Tokyo (JP); Pioneer Design Corporation, Meguro-ku, Tokyo (JP)
(72) Inventor: Hirayama, Naofumi, C/o Pioneer Design Corporation, Tokyo (JP)
(74) Representative: Haley, Stephen

(57) **Abstract**

In an information communication terminal, titles registered to my link that is the bookmark function are displayed on the screen of LCD 2 in the form of a list, and a title to be sorted is selected. Herein, when the function key 3 is depressed, an edit menu is displayed on the screen of LCD 2. Then, when "To the top" is selected in this edit menu and the scroll key 4 is depressed, sorting of the selected title is executed. At this time, the change is applied to the data within the memory as well as the display. Therefore, during each every time of displaying my link, the selected title is displayed at the top, whereby quick access can be made.

## Description

The present invention relates to the field of art for an information communication terminal such as a portable phone and the like and a method for sorting registered information in said terminal.

In conventional portable phones, by accessing an exclusive server that the user of a portable phone uses under contract, character information such as news and the like or image information such as games and the like can be received and displayed.

In addition, by accessing another server via the Internet, the character information or image information can be received and displayed.

However, the number of contents including character information and the like to be provided by the exclusive server is large, so that, to reach target contents, it becomes necessary to carry out troublesome operations such as passing through a page of contents having a plurality of hierarchies and further finding out a target title among a plurality of titles.

Also, in a case where the user accesses the contents on the Internet, generally, URL, which is a very long string of English alphanumerics must be directly inputted, so that troublesome operations are required.

Therefore, in order to eliminate such troublesome operations, a so-called "bookmark" function is provided. This bookmark function is a function to register favorite titles, titles the accessing frequency to which is high, or URLs on the Internet for each portable phone. When a user selects processing for registering a title or the like, access information to the title or the like is stored in the memory of the portable phone. Then, when the user selects processing for reading-out the registered title or the like, the registered titles are displayed in the form of a list, and when the user selects his/her desired title or the like from the list, whereby access information of the title or the like is read out from the memory, an instant access to the title or the like becomes possible.

By this bookmark function, troublesome operations such as the title selecting operation and URL input operation can be omitted, and quick access to desired information becomes possible.

However, since there are differences in accessing frequency among the titles registered by using the bookmark function as mentioned above, if the number of registrations increases, the operation to select a desired title or the like from the registration list becomes complicated.

That is, in conventional portable phones, the display order in the registration list is the order of registration, and old information is displayed at the lower section of the list, and new information is displayed at the upper section of the list.

In addition, the display region of a general portable phone is limited to 3cm x 3cm, so that the list including a number of titles cannot be displayed all at once.

Therefore, even in a case of an old title in the order of registration, if the accessing frequency to this title is high, operations such as scrolling the list or moving the cursor to the bottom becomes necessary, resulting in obstructing quick access.

Therefore, the invention has been made to solve the above problems, and an object of the invention is provide an information communication terminal and a method for sorting registered information in the terminal whereby a user can freely sort registered titles by using the bookmark function.

In order to achieve the above object, according to a first aspect of the invention, there is provided an information communication terminal comprising: a registration unit for storing information to be used in the information communication terminal into a storing unit as registered information, a display unit for displaying the registered information in the form of a list, a specifying unit for specifying one piece of information from the registered information displayed in the form of a list by the display unit, and an editing unit for changing the contents stored in the storing unit so as to move the display order of the specified one piece of information to the top of the list indication.

According to the information communication terminal of the first aspect of the invention, information to be used in the information communication terminal is stored in the storing unit as registered information. Then, the stored registered information is displayed in the form of a list by the display unit. Next, when one piece of information is specified from the registered information displayed in the form of a list by the display unit by means of the specifying unit, the editing unit changes the contents stored in the storing unit so as to move the display order of the specified one piece of information to the top of the list indication. Therefore, even in a case where the size of the display region by the display unit for the list indication is limited, and even in a case where the amount of registered information to be displayed in the list is large, the desired one piece of information is displayed at the top of the list, and therefore, quick access to the one piece of information becomes possible.

According to a second aspect of the invention, there is provided the information communication terminal in which the information communication terminal is accessible to a file stored in a predetermined server via the Internet, and the registered information includes access information to the file.

According to the information communication terminal of the second aspect of the invention, access is made to a file stored in a predetermined server via the Internet by said information communication terminal, and when information relevant to the file is stored in the storing unit as the registered information by the registration unit, the information includes access information to the file. Therefore, as mentioned above, in the case where one piece of information displayed at the top of the list indication is information showing the file, access to the file via the Internet is quickly made.

According to a third aspect of the invention, there is provided the information communication terminal in which the file is an HTML file described in HTML, and the registered information includes information for identification of the HTML file and URL information as access information to the HTML file.

According to the information communication terminal of the third aspect of the invention, information for identification of the HTML file described in HTML and URL information as specification information for the HTML file are stored in the storing unit in the form of a list. Therefore, as mentioned above, in the case where the information whose display order is moved to the top of the list is the information for identification of the HTML file, quick access to the HTML file specified based on the URL information can be made.

According to a fourth aspect of the invention, there is provided the information communication terminal in which the display unit is a means for displaying the contents of the file and the contents of another file that are accessible by means of hyperlink information described in the file, and the registered information includes information for identification of the other file and URL information included in the hyperlink information as access information to the other file.

According to the information communication terminal of the fourth aspect of the invention, the contents of the file is displayed by the display unit, and the contents of the other file that has been accessed by means of the hyperlink information are further displayed. Then, when information relevant to the other file is stored in the storing unit in the form of a list by the registration unit, information for identification of the other file and URL information included in the hyperlink information as access information to the other file are included. Therefore, as mentioned above, in the case where one piece of information displayed at the top of the list indication is information showing the other file, access to the file via the Internet is quickly made.

According to a fifth aspect of the invention, there is provided the information communication terminal in which the information communication terminal is accessible to an electronic mail server, and the registered information includes information for identification of a sending destination of the electronic mail and address information as specification information for the sending destination.

According to the information communication terminal of the fifth aspect of the invention, the information for identification of the sending destination of the electronic mail and the address information as specification information for the sending destination are stored in the storing unit. Therefore, as mentioned above, in the case where the information whose display order is moved to the top of the list indication is information for identification of the sending destination of the electronic mail, when access is made to the electronic mail server based on the address information, quick access can be made to the sending destination of the electronic mail that is specified based on the address information.

According to a sixth aspect of the invention, there is provided the information communication terminal in which when one piece of information is selected, the specifying unit causes the display unit to display an edit screen including an indication that the display order of the one piece of information is moved to the top, and when the display order of the indication that the one piece of information is moved to the top is selected, specifies the one piece of information as target information to be moved by the editing unit.

According to the information communication terminal of the sixth aspect of the invention, when a user selects the one piece of information, the specifying unit causes the display unit to display an edit screen including an indication that the display order of the one piece of information is moved to the top. Furthermore, when the user selects the indication that the display order of the one piece of information is moved to the top, the specifying unit specifies the one piece of information as target information to be moved by the editing unit. Therefore, it is possible for the user to easily and securely select the target information to be moved, and the information thus selected is securely moved to the top of the list.

According to a seventh aspect of the invention, there is provided the information communication terminal in which the edit screen includes the indication that the displaying name of the one piece of information is corrected, and indication that the one piece of information is deleted from the list, and when the indication of correction or deletion is selected, the specifying unit specifies the one piece of information as target information to be corrected or deleted by the editing unit, and the editing unit changes the contents stored in the storing unit so as to correct the displaying name of the information specified as a target to be corrected or delete the information specified as a target to be deleted.

According to a seventh aspect of the invention, there is provided the information communication terminal in which when the user selects the one piece of information, the specifying unit causes the display unit to display an edit screen. This edit screen includes the indication that the displaying name of the one piece of information is corrected and the indication that the one piece of information is deleted from the list. Then, when the user selects the indication of correction or deletion, the specifying unit specifies the one piece of information as a target to be corrected or deleted by the editing unit. As a result, the editing unit changes the contents stored in the storing unit so as to correct the display name of the information specified as a target to be corrected, or delete the information specified as a target to be deleted from the list. Therefore, it is possible for the user to easily and securely select the target information to be corrected or deleted, and the displaying name of the information thus selected is securely corrected, or the information is securely deleted from the list.

According to an eighth aspect of the invention, there is provided a method of sorting registered information in an information communication terminal, comprising the steps of:
storing information to be used in the information communication terminal in a storing unit as registered information;
displaying the registered information in the form of a list;
specifying one piece of information from the list indication; and
changing the contents stored in the storing unit so that the display order of the specified one piece of information is moved to the top of the list indication.

According to the method of sorting registered information in an information communication terminal of the eighth aspect of the invention, first, information to be used in the information communication terminal is stored in the storing unit as registered information. Then, the stored registered information is displayed in the form of a list. Next, one piece of information is specified from the registered information displayed in the form of a list, the contents stored in the storing unit are changed so that the display order of the specified one piece of information is moved to the top of the list indication. Therefore, even in the case where the size of the display region for the list indication is limited, and even in the case where the amount of registered information to be displayed in the form of a list is great, the desired one piece of information is displayed at the top of the list, whereby quick access to the one piece of information becomes possible.

According to a ninth aspect of the invention, there is provided the method of sorting registered information further comprising steps of accessing a file stored in a predetermined server via the Internet; and storing access information to the file as registered information.

According to the method of sorting registered information in an information communication terminal according to the ninth aspect of the invention, access is made to a file stored in a predetermined server via the Internet by the information communication terminal, and when information on the file is stored in the storing unit as registered information, access information to the file is included. Therefore, as mentioned above, in the case where the one piece of information displayed at the top of the list indication is information showing the file, access to the file via the Internet is quickly made.

According to a tenth aspect of the invention, there is provided the method for sorting registered information in an information communication terminal in which the file is an HTML file described in HTML, and the registered information includes information for identification of the HTML file and URL information as access information to the HTML file.

According to the method of sorting registered information in an information communication terminal of the tenth aspect of the invention, information for identification of the HTML file described in HTML and URL information as specification information for the HTML file are stored in the storing unit in the form of a list. Therefore, as mentioned above, in the case where information whose display order has been moved to the top of the list is information for identification of the HTML file, quick access can be made to the specified HTML file based on the URL information.

According to an eleventh aspect of the invention, there is provided the method of sorting registered information, in which a step for displaying the contents of the file and the contents of another file that are accessible by means of hyperlink information described in the file is further included, and the registered information includes information for identification of the other file and URL information included in the hyperlink information as access information to the other file.

According to the method for sorting registered information in an information communication terminal of the eleventh aspect of the invention, the contents of the file are displayed, and the contents of another file that has been accessed through the hyperlink information are further displayed. Then, when information on the other file is stored in the storing unit in the form of a list, information for identification of the other file and URL information included in the hyperlink information as access information to the other file are included. Therefore, as mentioned above, in the case where one piece of information displayed at the top of the list indication is information showing the other file, access to the other file via the Internet is quickly made.

According to a twelfth aspect of the invention, there is provided the method for sorting registered information further comprising the steps of accessing to an electronic mail server by the information communication terminal; and storing information for identification of the sending destination of the electronic mail as registered information and address information as specification information for the sending destination.

According to the method of sorting registered information in an information communication terminal of the twelfth aspect of the invention, information for identification of the sending destination of an electronic mail and address information as specification information for the sending destination are stored in the storing unit. Therefore, as mentioned above, in the case where the information whose display order has been moved to the top of the list indication is information for identification of the sending destination of the electronic mail, when access is made to the electronic mail server based on the address information, access to the sending destination of the electronic mail specified based on the address information can be quickly made.

According to a thirtieth aspect of the invention, there is provided a method of sorting registered information in an information communication terminal in which the step of specifying the one piece of information includes a step of causing the user to select the one piece of information, and when the selection is made, a step of displaying an edit screen including an indication that the display order of the one piece of information is moved to the top, a step of causing the user to select the indication in the edit screen, and when the indication that the display order of the one piece of information is moved to the top is selected by the user, a step of specifying the one piece of information as target information whose display order is to be moved is included.

According to the method of sorting registered information in an information communication terminal of the thirteenth aspect of the invention, when the one piece of information is selected by the user, an edit screen including the indication that the display order of the one piece of information is moved to the top is displayed. Then, the indication that the one piece of information is moved to the top of the display order is selected by the user, and the one piece of information is specified as target information is to be moved. Therefore, it is possible for the user to easily and securely select the target information to be moved, whereby the information thus selected securely moves to the top of the list.

According to a fourteenth aspect of the invention, there is provided the method of sorting registered information in an information communication terminal in which the edit screen includes an indication that the displaying name of the one piece of information is corrected and an indication that the one piece of information is deleted from the list, and in the case where the indication of correction or deletion is selected, the step of specifying the one piece of information includes a step of specifying the one piece of information as target information to be corrected or deleted, and the step of changing the stored contents includes a step of changing the contents stored in the storing unit so as to correct the displaying name of the information specified as a target to be corrected or delete the information specified as a target to be deleted from the list.

According to the method of sorting registered information in an information communication terminal according to the fourteenth aspect of the invention, when the one piece of information is selected by the user, an edit screen is displayed. This edit screen includes an indication that the one piece of information is corrected, and an indication that the one piece of information is deleted from the list. Then, when the user selects the indication of correction or deletion, the one piece of information is specified as target information to be corrected or deleted by the editing unit. As a result, the contents stored in the storing unit are changed so that the displaying name of the information specified as a target to be corrected is corrected or the information specified as a target to be deleted is deleted from the list. Therefore, it is possible for the user to easily and securely select the target to be corrected and deleted, and the displaying name of the information thus selected is securely corrected, or the information is deleted from the list.

**In the Drawings;**
Fig. 1 is a diagram showing the appearance of the portable phone as the information communication terminal in an embodiment of the invention;
Fig. 2 is a block diagram showing the construction of the controller of the portable phone of Fig. 1;
Fig. 3 is a schematic view of the network system to be applied to the portable phone of Fig. 1;
Fig. 4A is a diagram showing an example of the main menu screen of the portable phone of Fig. 1, and Fig. 4B is a diagram showing an example of the display screen for service information that can be used through the portable phone of Fig. 1;
Fig. 5A is a diagram showing an example of the main menu screen of the portable phone of Fig. 1, Fig. 5B is a diagram showing an example of the link display screen, Fig. 5C is a diagram showing an example of the list display screen of titles, Fig. 5D is a diagram showing an example of the initial screen for the selected titles, and Fig. 5E is a diagram showing an example of the text screen of the selected title;
Fig. 6A is a diagram showing a selection example of titles to be sorted in the list display screen of the portable phone of Fig. 1, Fig. 6B is a diagram showing an example of the edit menu screen, and Fig. 6C is a diagram showing an example of the list display screen after sorting is executed;
Fig. 7 is a diagram showing the data storing condition in the memory before sorting in accordance with the list display screen in Fig.6A is executed;
Fig. 8 is a diagram showing the storing condition of the saving address condition and page data within the memory in accordance with Fig. 7;
Fig. 9 is a diagram showing the data storing condition in the memory after sorting in accordance with the list display screen shown in Fig. 6C is executed; and
Fig. 10 is a flowchart showing sorting in the portable phone of Fig. 1.

Hereinafter, an embodiment of the invention is described with reference to the attached drawings.

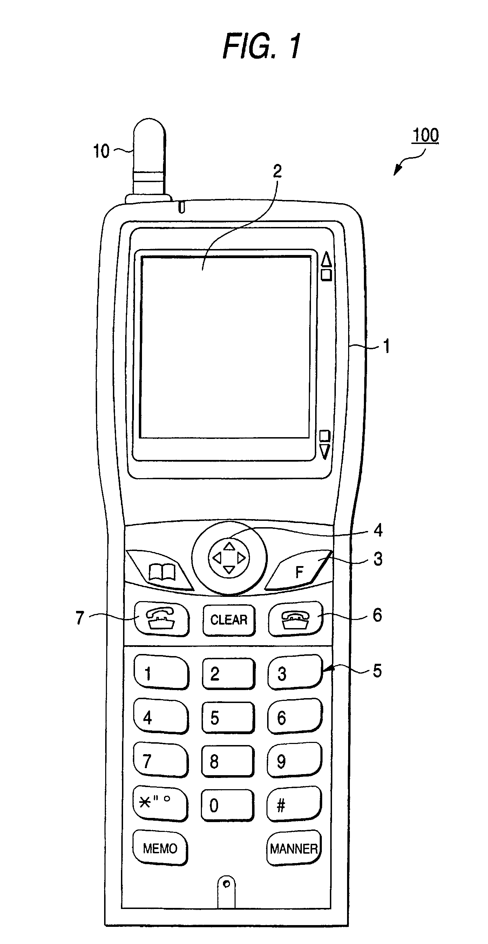

Fig. 1 is a front view of portable phone 100 as an information communication terminals showing an example of the embodiment of the invention, wherein LCD 2 as a display unit is disposed at the front upper section of casing 1, and function key 3 for displaying various menu screens on the LCD 2 is disposed on the right side of the lower side of the LCD 2, and furthermore, scroll key 4 for selection of various functions displayed on the LCD 2 is disposed on the left side of the function key 3.

The scroll key 4 is constructed so that the key's upper, lower, right, and left portions with triangle marks attached can be depressed, and the entirety of the scroll key 4 can be depressed downward.

Ten keys 5 for input of telephone numbers, call key 6, and disengage key 7 and the like are disposed at the lower side of the scroll key 4.

Furthermore, at the upper part of the casing 1, antenna 10 that can be freely extended and withdrawn is provided.

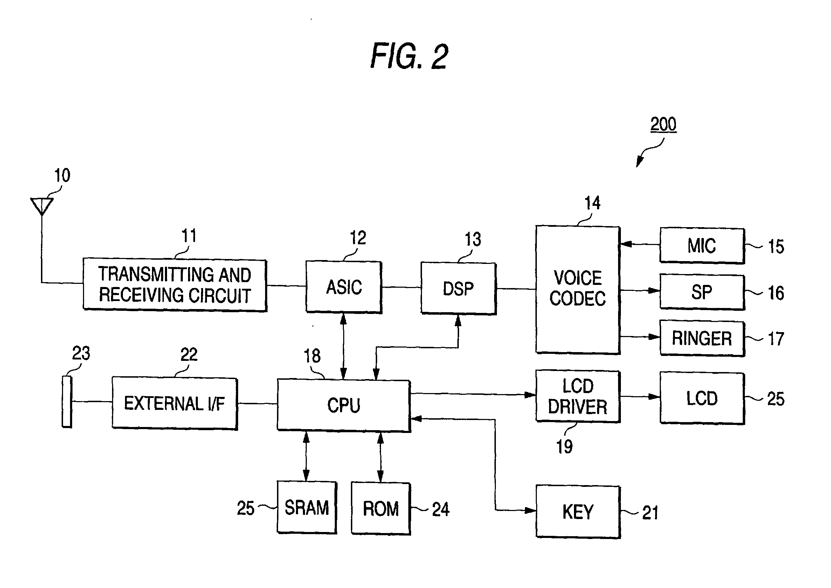

Fig. 2 is a block diagram showing the construction of controller 200 of the portable phone 100 shown in Fig. 1. As shown in Fig. 2, the controller 200 comprises the antenna 10, transmitting and receiving circuit 11, ASIC 12, DSP 13, voice codec 14, microphone 15, speaker 16, and ringer 17. The controller further comprises CPU 18, LCD driver 19, key 21, external I/F 22, connector 23, ROM 24, and SRAM 25.

Radio waves received by the transmitting and receiving circuit 11 by means of antenna 10 are inputted into the voice codec 14 via ASIC 12 that functions as a signal clock control and the interface with the CPU 18 and DSP 13 comprising a baseband controller, and D/A converted by this voice codec 14, and then outputted to the speaker 15 and ringer 16.

A voice signal inputted from the microphone 17 is A/D converted by the voice codec 14, and then transmitted from the antenna 10 via the DSP 13, ASIC 12, and transmitting and receiving circuit 11.

The CPU 18 is connected to the ASIC 12 and DSP 13, and to this CPU 18, the LCD 2 via LCD driver 19, key 21, connector 23 via the external I/F 22, ROM 24, and SRAM 25 are connected.

The LCD 2 executes display of various menus and various functions by operation of the LCD driver 19 that is controlled by the CPU 18.

The key 21 includes the abovementioned function key 3, scroll key 4, ten keys 5 and the like. Operation signals generated by operations of these keys are inputted into the CPU 18.

The connector 23 is connected to a personal computer or the like, and transmits various data from this personal computer or the like via the external I/F 22 and CPU 18, and inputs various data received by the antenna 10 into the personal computer or the like.

The CPU 18 governs operation controls of the abovementioned ASIC 12, DSP 13, LCD driver 19 and the like by means of various control programs for the portable phone that have been stored in the ROM 24.

In the SRAM 25, various private data inputted by a user such as abbreviated dial numbers, telephone directory data, electronic mail address book data, or bookmark information including websites or the like are stored.

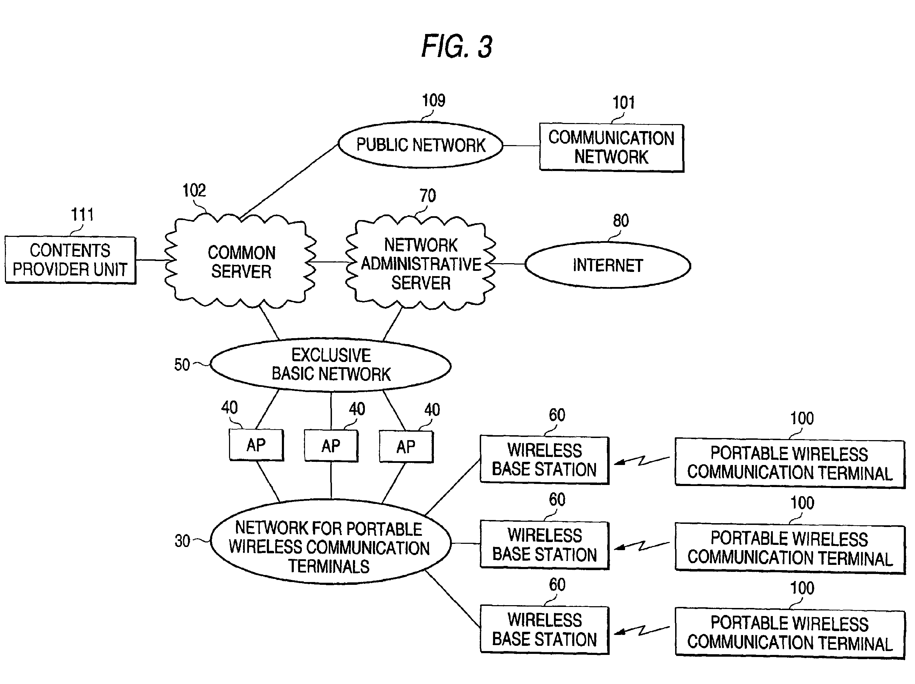

Next, a network system to be applied to the portable phone of the present embodiment is explained. Fig. 3 is a diagram for explanation of the conceptual configuration of the communications network system in the present embodiment. In Fig. 3, to one common server 102, a plurality of information communication terminals including the portable phone 100 as a portable wireless communication terminal under contract with the server 102, and communication terminal 101 such as a personal computer or the like are connected via the network, whereby an information communications system is structured.

When a contract between the common server 102 and the portable phone 100 as a portable information communication terminal is made, a subscriber who has made a contract is provided with a subscriber identification information and a password as well as address information for connection to the common server 102 from the portable phone 100.

However, since the subscriber who has made the contract is provided with the portable phone 100 in which a memory that has stored identification information including the subscriber identification information and the password and connection information including address information of the server 102 in advance is installed, the subscriber is not conscious of these identification information and connection information. In this case, the subscriber does not need to carry out troublesome inputs of the identification information and connection information into his/her own portable phone 100.

That is, a terminal ID for identification of each portable phone is provided for each portable phone 100, and the terminal ID is the subscriber identification information.

On the other hand, in the subscriber administrative server of the common server 102, terminal IDs are registered in advance, and when a subscriber contract is made and the portable phone 100 is provided to the subscriber and serves as the subscriber terminal, the subscriber terminal is registered to the subscriber administrative server.

A password is commonly allotted to all portable phones 100 as subscriber terminals. Of course, a password may be set for each portable phone 100 as a subscriber terminal and administered. The common server 102 administers this password.

The address information in the common server 102 is commonly stored in the memories of all portable phones 100. However, in some cases, the communication path to be connected to the common server 102 is different depending on the subscriber terminal, and in this case, the address is different depending on the portable phone 100 due to interposed servers.

Identification information including a user ID and password that are required for request of a connection from the portable phone 100 to the common server 102 via the communication path and connection information including the address information of the server 102 are stored in the abovementioned SRAM 25. The common server 102 administers the information as subscriber information.

Thus, immediately after the subscriber acquires the portable phone 100, by using the portable phone 100, the subscriber can access the common server 102 and use all data communication services provided by the common server 102.

The plurality of portable phones 100 and other same type portable wireless communication terminals are connected wirelessly to wireless base stations 60 provided for each predetermined area in which the range that radio waves can reach is taken into account. For connection in the network for portable wireless communication terminals such as connection between the wireless base stations 60, for example, optical cables are used.

Each wireless base station 60 is connected to exclusive basic network 50 via network 30 for potable wireless communication terminals and access points (AP) 40. Furthermore, to the exclusive basic network 50, network administrative server 70 for administering the network is connected. This network administrative server 70 administers so-called routing between the common server 102 and portable phones 100. Therefore, in terms of routing administration by the network administrative server 70, the common server 102 can be placed as one of the terminals to be connected to the exclusive basic network 50. In this case, the network administrative server 70 is also connected to the Internet 80.

The abovementioned address information stored in the portable phone 100 includes the address of the network administrative server 70.

In the present embodiment, the network administrative server 70 is also directly connected to the common server 102, and identifies the portable phones 100 entrusted by the common server 102, and transmits the records of accesses to the common server 102 from the subscriber terminals to the common server 102 to the common server 102 from the network administrative server 70. That is, in the present embodiment, total subscriber management such as charging log collection from the portable phones 100 is carried out by the common server 102.

In other words, in the case of the present embodiment, the portable phones 100 are under contract with the common server 102, and are not under contract with the network administrative server 70. The common server 102 entrusts the network administrative server 70 to administer network connections from the portable phones 100, so that there is also a contractual relationship of contract between the common server 102 and network administrative server 70. Therefore, the common server 102 can be connected to the abovementioned exclusive basic network 50 and the network administrative server 70 with completely the same relationship.

Therefore, to each portable phone 100, a network administrative server 70 in which the region of the subscriber who has been provided with a phone is assigned and taken into account.. The address of this network administrative server 70 is written into the memory (SRAM) 25 of the portable phone 100 in advance, so that the subscriber himself/herself is not conscious of the address.

The common server 102 has a function whereby, upon connection to the public network, the portable phone 100 can receive and transmit communications data from and to the communication terminal 101 such as a facsimile terminal or a personal computer connected to the public network.

Furthermore, in the present embodiment, for providing information providing services for the portable phones 100, the common server 102 has a storage which is apart of the providing information database. In addition, the common server 102 is connected to contents provider units 111, whereby information that is a part of the database of information to be provided for subscribers is acquired and provided for the portable phones 100.

The contents provider units 111 are possessed by provider companies having peculiar providing information, and under contract with the service company possessing the common server 102, provide information for the portable phones 100 via the common server 102. In Fig. 3, only one contents provider unit is shown, however, a plurality of contents provider units 3 may be connected to the common server 102.

The connection between the common server 102 and contents provider unit 111 is made via an exclusive line or a network such as the Internet.

In the present embodiment, information from the contents provider unit 111 connected to the common server 102 via the exclusive line or network is acquired upon access to the contents provider unit 111 when a service providing request is sent from the portable phone 100 to the common server 102, and provided to the portable phone 100 that made the request.

That is, from the menu list displayed on the display screen of the LCD 2, when the WWW browser function is selected, the portable phone 100 can acquire and display contents information from the common server 102.

At this time, an HTTP protocol (Hyper Text Transfer Protocol) is used for receipt and transmission of data between the common server 102 and portable phone 100. Furthermore, the data format of information provided from the common server 102 is the HTML (Hyper TEXT Makeup Language) format.

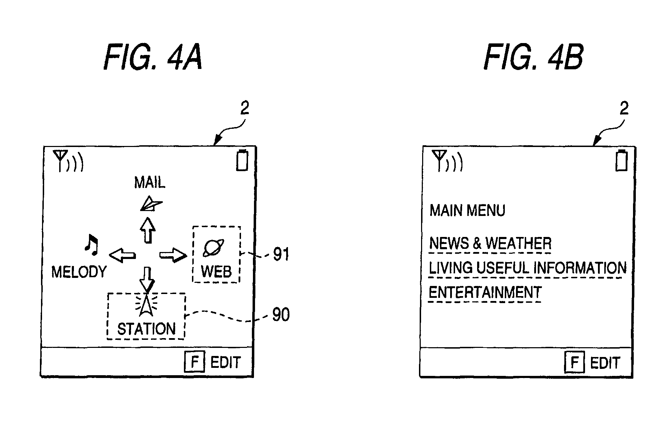

For example, in the main menu screen shown in Fig. 4A, station icon 90 is selected by the scroll key 4, and in this condition, when a decision is further made by depressing the entirety of the scroll key 4, the WWW browser function is selected. At this time, the portable phone 100 generates and sends a connection request by using the subscriber ID information and connection information stored in the SRAM 25 in advance, and automatically executes processing for connection to the common server 102.

The common server 102 provides the list of information providing services that the common server 102 can provide to the portable phone 100 that requested it.

The portable phone 100 receives the list of information providing services from the common server 102, and displays it on the display screen of the LCD 2 as shown in Fig. 4B. The user of the portable phone 100 selects a desired information providing service from the list of information providing services displayed on the display screen of the LCD 2 by using the scroll key 4, and makes a decision by depressing the entirety of the scroll key 4 in the selected condition, whereby the user can receive and see the information providing service provided from the common server 102.

In the present embodiment, the common server 102 can provide contents information including news, restaurant guides, Kanji dictionary information, map information, transfer information, useful information, fortune telling information, and the like.

In addition, in the main menu screen shown in Fig. 4A, by selecting Webicon 91 by the scroll key 4, contents information including general websites provided on the Internet 80 shown in Fig. 3 can also be acquired.

Furthermore, services to be provided from the common server 102 upon depressing the station icon 90 are also data described in the HTML format as mentioned above, wherein links to websites on the Internet are possible by the hyperlink function. Therefore, in the case where this link is selected, a transfer is made from the service provided from the common server 102 to contents information such as a general website provided on the Internet.

In many cases, the contents information in the common server 102 or the Internet 80 is periodically or occasionally updated in order to provide new information. Therefore, the updated new information is frequently acquired by repeatedly accessing the window or website of the same service. However, when accessing the target service or website, selecting the service with the scroll key 4 or inputting the URL address of the website is troublesome, and in this case, it may be difficult to access the target service or website due to an input failure.

In order to solve such a problem, the portable phone 100 of the present embodiment is provided with a bookmark function called "my list". By this function, information relevant to contents information such as address information showing the address of the provided contents information in the network and title information details of the contents information showing the contents of the contents information are stored in SRAM 25 in the form of a list, and by using the address information of the contents information stored in the SRAM 25, the target contents information can be easily and repeatedly acquired.

Next, this bookmark function called "my link" is explained in detail.

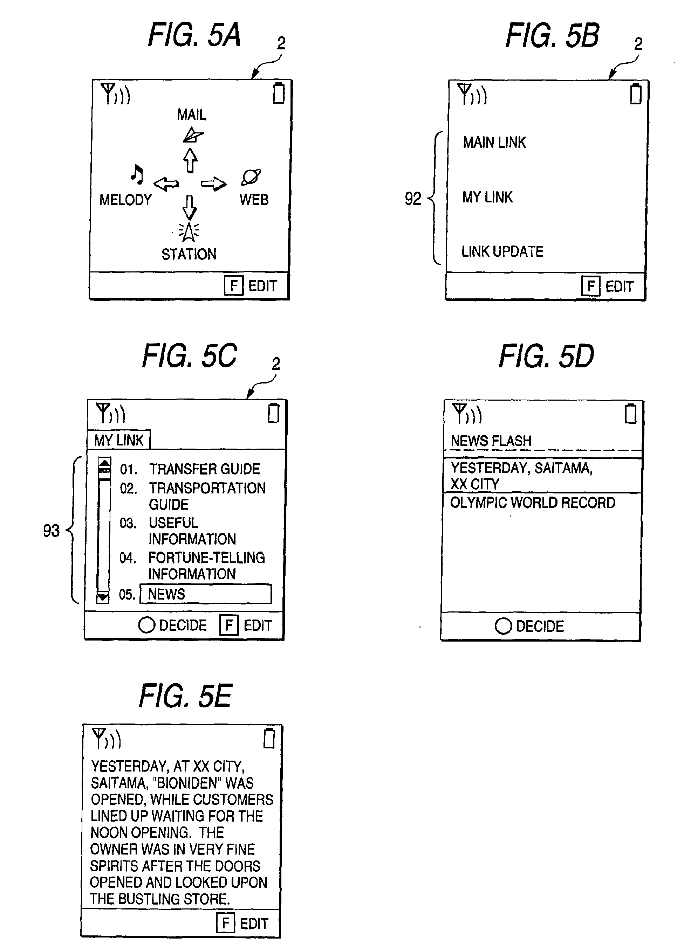

To register title information or the like to my link, as shown in Fig. 5A, in a condition where no icons are selected in the main menu, the entirety of the scroll key 4 is depressed. As a result, as shown in Fig. 5B, link indication 92 is displayed on the screen, and the "Link update" is selected with the scroll key 4 from the indication. When this "Link update" is selected, title characters such as "News", "Fortune-telling information" or the like or a message for requesting input of a URL of the website on the Internet is displayed, and following the instruction, the title characters are inputted. Last, registration is made by using the scroll key 4, whereby the title information or the like is stored in the SRAM 25. In the present embodiment, the number of titles that can be registered in my link is 10 at most due to the relationship with the memory capacity.

To access a website on the Internet, input of the URL is required. To make it easy to identify the URL in my link, the titles of my link indication can be freely registered by the user at his/her option.

In the present embodiment, in a condition where a website or the like is displayed on the LCD 2, when the function key 3 is depressed, the mode can be shifted to the registration mode to my link. In this case, the title characters described at the top of the displayed website may be automatically registered as a title in my link.

Furthermore, to obtain a service provided from the common server 102 other than services via the Internet, title information such as the abovementioned "News" or the like is linked to information such as the URL for specification of actual service information in the list region of the SRAM 25 of the portable phone 100.

This linkage may be carried out in the common server 102. Thereby, by only sending title information such as the "News" or the like to the common server 102, desired service information is provided.

Next, the case where information is viewed by using the registered my link is explained. First, as shown in Fig. 5A, in the condition where no icons are selected in the main menu, the entirety of the scroll key 4 is depressed. As a result, link indication 92 is displayed on the screen as shown in Fig. 5B, and the "My link" is selected by using the scroll key 4 from the indication and further decides the information by depressing the entirety of the scroll key 4. As a result, as shown in Fig. 5C, list 93 of the registered titles is displayed on the screen. Then, the user selects information that he/she wants to read by using the scroll key 4 and is further decided by depressing the entirety of the scroll key 4, whereby the user can view the contents of each service as shown in Fig. 5D. In the case shown in Fig. 5D, the service is "News", and the initial screen displays headlines. Then, the user further selects news that he/she wants to read from the headlines by using the scroll key 4, and further makes a decision by depressing the entirety of the scroll key 4, whereby the user can view the text of the news as shown in Fig. 5E.

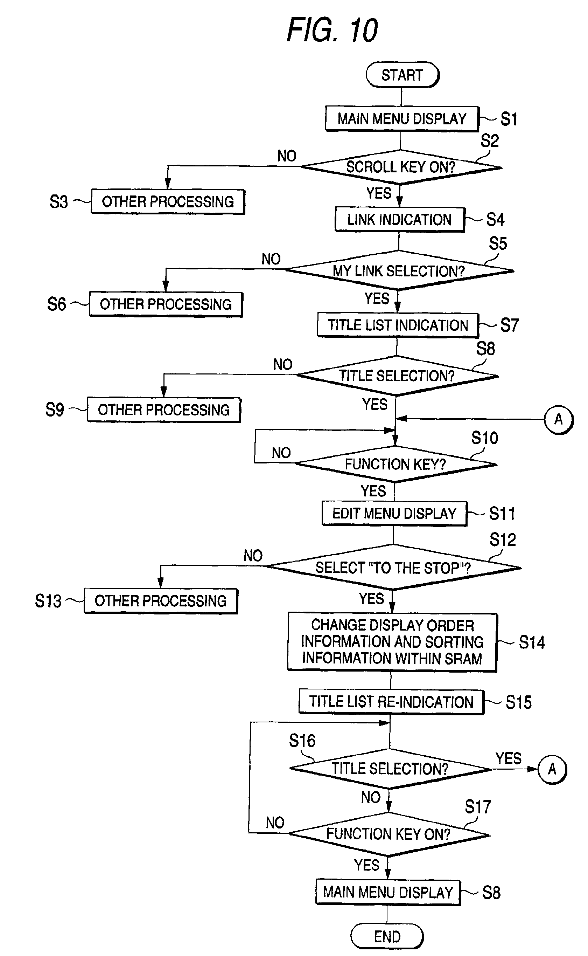

Next, my link sorting processing in the present embodiment is described based on Figs. 5A to Fig. 10.

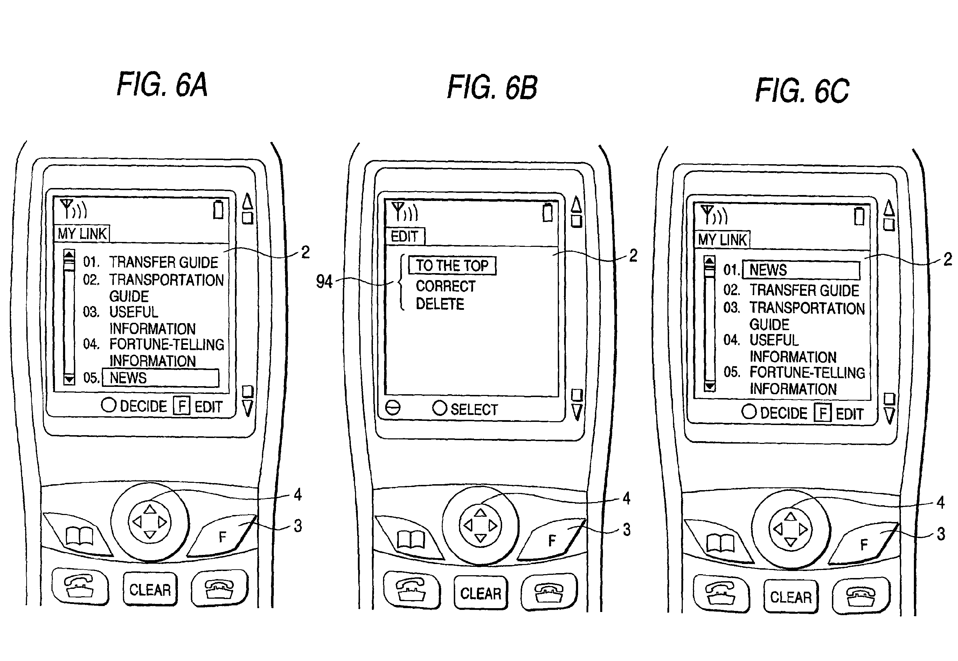

In this case, as shown in Fig. 5A, in a condition where no icons are selected in the main menu (step S1), the entirety of the scroll key 4 is depressed first (step S2; YES). As a result, link indication 92 is displayed on the screen as shown in Fig. 5B (step S3), so that the "My link" is selected from the indication by using the scroll key 4 and is further decided by depressing the entirety of the scroll key 4 (step S5; YES) . As a result, the list 93 of registered titles is displayed on the screen as shown in Fig. 5C (step S7). Processing up to this is the same as in the case where information is read-out by using my link. Next, the user uses the scroll key 4 to select a title that he/she wants to move to the top (step S8; YES). In the case of Fig. 6A, an example in which the "News" is selected is shown.

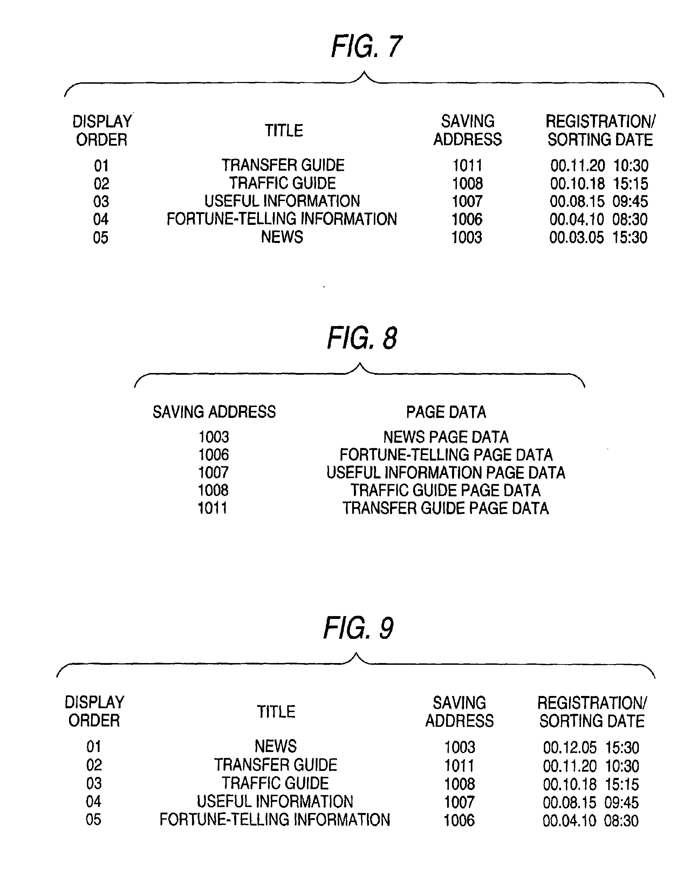

In addition, in this indication, the latest registered or sorted title is displayed at the top, and the older the date of registration or sorting, the later the display order. The data storing condition within the list region within the SRAM 25 in the case of Fig. 6A is shown in Fig. 7. As shown in Fig. 7, each title is stored so that the display order, saving address in the data saving region within the SRAM 25, and date of registrationor sorting are linked. Fig. 8 shows the data saving condition in the data saving region within the SRAM 25. As shown in Fig. 8, the newer the date of registration of a title, the larger the saving address number of the title. URL information or the like is stored in page data. When the spare area in the saving region is used up, data may be written into a spare area produced by deleting the title. In this case, the date of registration into the spare area does not correspond with the saving address number.

Next, in the condition shown in Fig. 6A, the function key 3 is depressed (step S10; YES). As a result, edit menu 94 is displayed on the screen as shown in Fig. 6B (step S11). Then, "To the top" is selected from the edit menu 94 by using the scroll key 4, and is decided by depressing the entirety of the scroll key 4 (step S12; YES).

As a result, in the list region within the SRAM 25, as shown in Fig. 9, the display order of the "News" becomes "01", and the display orders of other titles are also updated in order. Then, the date of registration and sorting of the "News" is updated for the date on which the sorting operation was carried out (step S14).

Then, the "News" is displayed at the top of my link on the screen as shown in Fig. 6C (step S15).

Thereafter, by repeatedly carrying out this operation, desired sorting can be carried out. That is, when the title is selected again (step S16; YES), the processings of step S10 onward are repeated.

When the function key 3 is depressed again in the condition where the list of titles is displayed (step S17; YES), the main menu is displayed (step S18), whereby the sorting mode is ended.

In this embodiment, the invention is applied to sorting in my link whereby websites on the Internet and services provided from the common server 102 are stored as bookmarks, however, the invention is not limited to this embodiment. For example, the invention can also be applied to the electronic mail address book displayed in the form of a list.

The invention can be applied to a case where titles not in my link but URLs are directly displayed in the form of a list. In this case, the URLs are sorted.

In the case where "Correct" is selected and decided by using the scroll key 4 in the condition where the edit menu 94 is displayed as shown in Fig. 6B, displaying names of titles registered to my link can be freely changed.

When the "Delete" is selected and decided by using the scroll key 4 in the condition where the edit menu 94 is displayed, the titles registered to my link can be freely deleted. Therefore, even in a case where the number of titles registered to my link reaches the maximum, by deleting unnecessary titles, new titles can be registered in order.

As described above, according to the invention, list data such as my link can be sorted in the user's desired order, so that a useful information communication terminal can be provided.

In addition, sorting can be realized by easy operation as mentioned above, the invention is specially efficient for instruments such as portable phones the operation of which is mainly made by one hand.

Furthermore, the time for the procedures to be carried by the user required for sorting is shorter than that of other processing, and the operation is also easy. Therefore, the time required for the program is also shorter than that of other processing, and the program can be easily realized.

Although the display region is limited in the case of a portable phone, in the case where the number of pieces of information to be registered such as website information is extremely large, the invention is especially efficient, and even in the case where a number of titles are registered, quick access is possible by moving a title whose accessed frequency is high to the top.

According to the method of sorting registered information in the information communication terminal of the first aspect of the invention and the information communication terminal of the eighth aspect of the invention, when one piece of information is specified from registered information that has been displayed in the form of a list, the contents stored in the storing unit are changed so that the display order of the specified one piece of information in the list indication is moved to the top, so that, even in a case where the size of the display region for the list indication is limited, and even in a case where the amount of registered information displayed in the form of a list is large, the desired one piece of information is displayed at the top of the list, whereby quick access to the one piece of information becomes possible.

According to the method of sorting registered information in the information communication terminal according to the second aspect of the invention and the information communication terminal of the ninth aspect of the invention, access is made to a file stored in a predetermined server via the Internet, and when information relevant to the file is stored in the storing unit as the registered information, access information to the file is included therein, so that, in the case where the one piece of information displayed at the top of the list indication as mentioned above is information showing the file, quick access to the file can be made via the Internet.

According to the method of sorting registered information in the information communication terminal of the third aspect of the invention and the information communication terminal of the tenth aspect of the invention, information for identification of an HTML file described in HTML and URL information as specification information for the HTML file are stored in the storing unit in the form of a list, so that, in the case where information whose display order is moved to the top of the list as mentioned above is information for identification of the HTML file, quick access to the specified HTML file based on the URL information can be made.

According to the method of sorting registered information in the information communication terminal of the fourth aspect of the invention and the information communication terminal of the eleventh aspect of the invention, the contents of another file accessed based on hyperlink information are displayed, and when information relevant to the other file is stored in the storing unit in the form of a list, information for identification of the other file and URL information included in the hyper link information as access information to the other file are included therein. Therefore, in the case where the one piece of information displayed at the top of the list indication is information showing the other file, quick access to the other file via the Internet can be made.

According to the method of sorting registered information in the information communication terminal of the fifth aspect of the invention and the information communication terminal of the twelfth aspect of the invention, information for identification of the sending destination of an electronic mail and address information as specification information for the sending destination are stored in the storing unit. Therefore, in the case where the information whose display order has moved to the top of the list indication as mentioned above is information for identification of the sending destination of the electronic mail, when access to the electronic mail server is made based on the address information, quick access to the sending destination of the specified electronic mail based on the address information can be made.

According to the method of sorting registered information in the information communication terminal of the sixth aspect of the invention and the information communication terminal of the twelfth aspect of the invention, when the one piece of information is selected by the user, the specifying unit causes the display unit to display an edit screen including an indication that the display order of the one piece of information is moved to the top. Furthermore, when the indication that the display order of the one piece of information is moved to the top is selected by the user, the one piece of information is specified as target information to be moved by the editing unit. Therefore, it is possible for a user to easily and securely select the target information to be moved, and therefore, the selected information can be securely moved to the top of the list.

According to the method of sorting registered information in the information communication terminal of the seventh aspect of the invention and the information communication terminal of the twelfth aspect of the invention, when the one piece of information is selected by the user, the specifying unit causes the display unit to display an edit screen. This edit screen includes an indication that the displaying name of the one piece of information is corrected and an indication that the one piece of information is deleted from the list. Then, when the indication of correction or deletion is selected, the specifying unit specifies the one piece of information as target information to be corrected or deleted by the editing unit. As a result, the editing unit changes the contents stored in the storing unit so as to correct the displaying name of the information specified as a correction target or delete the information specified as a deletion target. Therefore, it is possible for the user to easily and securely select the target information to be corrected or deleted, and the user can securely correct the displaying name of the selected information or delete the selected information from the list.

## Claims

1. An information communication terminal comprising:
a registration unit that stores information to be used in the information communication terminal into a storing unit as registered information;
a display unit that displays the registered information in the form of a list;
a specifying unit that specifies one piece of information from the registered information displayed in the form of list by the display unit; and
an editing unit that changes the stored contents in the storing unit so that the display order for the specified one piece of information comes to the top of the list indication.

2. An information communication terminal according to Claim 1, wherein the information communication terminal is accessible to a file stored in a predetermined server via the Internet, and the registered information includes the access information to the file.

3. An information communication terminal according to Claim 2, wherein the file is an HTML file described in HTML, and includes information for identification of the HTML and URL information as access information to said HTML file.

4. An information communication terminal according to Claim 3, wherein the display unit is a unit for displaying the contents of the file and contents of another file that are accessible by means of hyperlink information described in the file, and the registered information includes information for identification of the other file and URL information included in the hyperlink information as access information to the other file.

5. An information communication terminal according to Claim 1, wherein the information communication terminal is accessible to an electronic mail server, and the registered information includes information for identification of the sending destination of the electronic mail, and address information as specification information for the destination.

6. An information communication terminal according to Claim 1, wherein, when one piece of information is selected, the specifying unit causes the display unit to display an edit screen including an indication that the display order of the one piece of information is moved to the top, and when the indication that the display order of the one piece of information is moved to the top is selected, the specifying unit specifies the one piece of information as information to be moved by the editing unit.

7. An information communication terminal according to Claim 6, wherein the edit screen includes an indication that the displaying name of the one piece of information is corrected and an indication that the one piece of information is deleted from the list, and when the indication of correction or indication of deletion is selected, the specifying unit specifies the one piece of information as target information to be corrected or deleted by the editing unit, and the editing unit changes the contents stored in the storing unit to correct the displaying name of the information specified as a correction target or delete the information as a deletion target from the list.

8. A method of sorting registered information in an information communication terminal, said method comprising the steps of:
causing a storing unit to store information to be used in the information communication terminal specified as registered information;
displaying the registered information in the form of a list;
specifying one piece of information from the list indication; and
changing the stored contents in the storing unit so as to move the display order of the specified one piece of information to the top of the list indication.

9. A method of sorting registered information in an information communication terminal according to Claim 8, further comprising steps of accessing a file stored in a predetermined server via the Internet, and storing the access information to said file as registered information.

10. A method of sorting registered information in an information communication terminal according to Claim 9, wherein the file is an HTML file described in HTML, and the registered information includes information for identification of said HTML file and URL information as access information to said HTML file.

11. A method of sorting registered information in an information communication terminal according to Claim 10, further comprising a step of displaying the contents of the file and the contents of another file that are accessible by means of hyperlink information described in the file, wherein the registered information includes information for identification of the other file and URL information included in the hyperlink information.

12. A method of sorting registered information in an information communication terminal according to Claim 8, further comprising, by the information communication terminal, a step of accessing an electronic mail server and a step of storing information for identification of the sending destination of said electronic mail as the registered information and address information as sending destination specification information as access information to said other file.

13. A method of sorting registered information in an information communication terminal according to Claim 8, wherein the step of specifying the one piece of information includes a step for causing a user to select the one piece of information, and when said selection is made, further includes a step of displaying an edit screen including the indication that the display order of the one piece of information is moved to the top and a step of causing the user to select the indication in the edit screen, and when the indication that the display order of the one piece of information is moved to the top is selected by the user, and still further includes a step of specifying the one piece of information as information whose display order is to be moved.

14. A method of sorting registered information in an information communication terminal according to Claim 13, wherein the edit screen includes an indication that the displaying name of the one piece of information is corrected and an indication that the one piece of information is deleted from the list, and the step of specifying the one piece of information includes a step of specifying the one piece of information as target information to be corrected or deleted when the indication of correction or deletion is selected, and the step of changing the stored contents includes a step of changing the contents stored in the storing unit so as to correct the displaying name of the specified information as a correction target or delete the information specified as a deletion target from the list.
